# EUROPÄISCHE PATENTSCHRIFT

(11) **EP 4 025 716 B1**
(45) Veröffentlichungstag und Bekanntmachung des Hinweises auf die Patenterteilung: **10.12.2025**
(21) Anmeldenummer: 20760361.4
(22) Anmeldetag: 24.08.2020
(51) Int. Cl.: C13B 30/00, C13B 30/02, C13K 1/10, B01D 9/00

(54) **KÜHLUNGSKRISTALLISATOR UND VERFAHREN ZUR ZUCKERKRISTALLISATION**
COOLING CRYSTALLIZER AND SUGAR CRYSTALLIZATION METHOD
CRISTALLISEUR DE REFROIDISSEMENT ET PROCÉDÉ DE CRISTALLISATION DE SUCRE

(30) Priorität: 05.09.2019 DE 102019123903
(43) Veröffentlichungstag der Anmeldung: 13.07.2022
(73) Patentinhaber: BMA Braunschweigische Maschinenbauanstalt GmbH, 38122 Braunschweig (DE)
(72) Erfinder: LEHNBERGER, Andreas, 38106 Braunschweig (DE); SCHMIDT, Jörg, 2391 Salem (DE); ALJETS, Folker, 38239 Salzgitter (DE)
(74) Vertreter: Gramm, Lins & Partner Patent- und Rechtsanwälte PartGmbB
(86) Internationale Anmeldenummer: PCT/EP2020/073602
(87) Internationale Veröffentlichungsnummer: WO 2021/043608

(56) Entgegenhaltungen:
- DE-A1- 2 743 671
- BMA-KRISTALLFUSSANLAGEN ANONYMOUS: "technik-programm", 1 January 2005 (2005-01-01), pages 1 - 16, XP055757884, Retrieved from the Internet <URL:https://www.bma-worldwide.com/fileadmin/_migrated/content_uploads/Kristallisation_dt_9_01.pdf> [retrieved on 20201208]
- MICHAEL GETAZ ET AL: "Recent development s in vert ical cooling cryst alliser design", 1 November 2011 (2011-11-01), pages 1 - 8, XP055757943, Retrieved from the Internet <URL:https://dk8mx37zdr9bp.cloudfront.net/sugar-bio-energy/Recent%20developments%20in%20vertical%20cooling%20crystalliser%20design-Published%20in%20the%20Sugar%20Industriy%20-%20November%202011.pdf> [retrieved on 20201208]
- MICHAEL GETAZ ET AL: "Recent development s in vert ical cooling cryst alliser design", 1 November 2011 (2011-11-01), pages 1 - 8, XP055757943, Retrieved from the Internet <URL:https://dk8mx37zdr9bp.cloudfront.net/sugar-bio-energy/Recent%20developments%20in%20vertical%20cooling%20crystalliser%20design-Published%20in%20the%20Sugar%20Industriy%20-%20November%202011.pdf> [retrieved on 20201208]
- MARIO LLANO-RESTREPO: "Modeling and Simulation of Vertical Continuous Cooling Crystallizers for the Sugar Industry", INDUSTRIAL & ENGINEERING CHEMISTRY RESEARCH, vol. 44, no. 24, 1 November 2005 (2005-11-01), pages 9244 - 9263, XP055757940, ISSN: 0888-5885, DOI: 10.1021/ie0504046

## Beschreibung

Die Erfindung betrifft einen Kühlungskristallisator für Saccharose-Magma in einem vertikal orientierten Behälter, der einen obenseitigen Einlass zum Zuführen und einen untenseitigen Auslass zum Abführen von Magma aufweist, mit mehreren, vertikal zueinander beabstandeten Kühlblöcken, wobei die Kühlblöcke von einem Wärmeträgerfluid durchströmt und mit einem Wärmetauscher gekoppelt sind, um Wärme aus dem Magma abzuführen. Die Erfindung betrifft ebenfalls ein Verfahren zur Zuckerkristallisation und Abkühlung von Zucker-Magma in einem Kühlungskristallisator.

Die Kristallisation des Zuckers ist ein entscheidender verfahrenstechnischer Schritt zur Gewinnung der in Dicksaft gelösten Saccharose. Während eines Kristallisationsschrittes ist die technisch erreichbare Entzuckerung einer Lösung durch den Kristallgehalt im Magma begrenzt. Es sind daher mehrere Kristallisationsstufen erforderlich. Mit dem physikalischen Vorgang der Kristallisation kann eine hervorragende Trennung des Zuckers von den Nicht-Zuckerstoffen erzielt werden. Voraussetzung hierfür ist ein gut geführter Kristallisationsprozess, bei dem ein Kristallisat mit einem geringen Aggregatanteil und wenig Falschkorn erzeugt wird. Sehr lange Zeit wurde eine Verdampfungskristallisation des Zuckers fast ausschließlich in diskontinuierlich arbeitenden Apparaten durchgeführt. Verbesserungen sowohl im Hinblick auf die Zuckerqualität als auch die Reduktion des Energieeinsatzes bei der Kristallisation brachte der Einsatz von mechanischen Rührwerken in solchen diskontinuierlich arbeitenden Verdampfungskristallisatoren. Zwischenzeitlich sind kontinuierlich arbeitende Verdampfungskristallisatoren üblich, um eine gleichmäßige Magmaerzeugung zu gewährleisten.

Nach der Verdampfungskristallisation, in der ein Hauptteil der Zuckerkristallmasse erzeugt wird, wird das Magma abgekühlt. Ziel dabei ist, dem Muttersirup so viel Saccharose wie möglich durch Weiterkristallisieren der bereits vorhandenen Kristalle zu entziehen. Es handelt sich hierbei um die letzte Entzuckerungsstufe bei der Zuckerherstellung. Fehler in der Prozessführung bei der Abkühlung haben irreversible Auswirkungen auf die Zuckerverluste in der Melasse, sodass der Kühlungskristallisation eine große Bedeutung zukommt. Nach der Abkühlung wird die Mutterlösung von den Kristallen in einer Zentrifuge getrennt. Dabei ist darauf zu achten, dass die Kristalle eine bestimmte Größe nicht unterschreiten, da diese sonst mit der Mutterlösung durch das Zentrifugensieb hindurch treten und als Zuckerkristall verloren gehen, die Zuckerausbeute würde dadurch geschmälert werden. Daher ist bei der Abkühlung ein Ziel, dass keine neuen Kristalle gebildet werden, sondern dass die Kristallbildung nur an bereits vorhandenen Kristallen stattfindet. Die Bildung neuer Kristalle wird dadurch verhindert, dass bestimmte Übersättigungen nicht überschritten werden. Weiterhin ist bei der Zuckerkristallisation zu beachten, dass durch ein fortgesetztes Kristallwachstum die Übersättigung in der Mutterlösung abgebaut wird, was eine weitere Kristallisation schließlich verhindert. Erst durch eine Temperaturabsenkung des Magmas kann die Übersättigung wieder auf das gewünschte Maß gesteigert werden.

Grundsätzlich kann die Abkühlung des Magmas in offenen Behältern ohne Isolierung oder in Behältern mit eingebauten Kühlrohren oder Kühlflächen erfolgen.

Aus der GB 2053019A ist ein Wärmetauscher zur Kristallisation von Suspension bekannt, bei dem in einem zylindrischen Körper mehrere vertikal zueinander beabstandete Kühlelemente angeordnet sind, durch die ein Wärmetauscherfluid durchgepumpt wird. Über zwei Hydraulikkolben werden die Kühlelemente angehoben und abgesenkt.

Die DE 35 17 511 C2 betrifft ein Kühlungskristallisationsturm für Zucker-Magma mit einem stehenden, zylindrischen Behälter mit obenliegendem Einlass und einem untenliegenden Auslass und den Behälter in Kammern unterteilenden Etagenböden, die eine sich nach unten verjüngende Konusform aufweisen. In jeder Kammer ist ein Zylinder angeordnet, der mit dem Etagenboden eine verschließbare Durchgangsöffnung bildet. Darüber hinaus sind in jeder Kammer ein Wärmetauscher, der von einem Kühlmedium durchströmt ist, und in vertikaler Richtung oszillierbare Umwälzelemente angeordnet.

US 8 475 597 B2 betrifft ein Verfahren und eine Vorrichtung zur Zuckerkristallisation durch gesteuertes Abkühlen gesättigter Zuckerlösung in einem Kristallisator mit einem zylindrischen Gehäuse, an dessen Oberseite ein Einlass für eine gesättigte Zuckerlösung und an dessen Unterseite ein Auslass für eine kristallisierte Masse ausgebildet sind. Innerhalb des Gehäuses sind eine Vielzahl von Wärmetauschern in unterschiedlichen Ebenen quer zur Längserstreckung des Gehäuses angeordnet. Jeder Wärmetauscher definiert im Inneren des Gehäuses eine jeweilige Kristallisationsstufe der Masse, die von oben nach unten durch das Gehäuse bewegt wird. Die Wärmetauscher sind in Form einer Spirale oder einer Wicklung ausgebildet und jeweils mit einem Anschluss für Heizwasser oder Kühlwasser versehen. Aus einem Auslass wird das Wärmetauschermedium in den unmittelbar darüberliegenden Wärmetauscher bis zum obersten Wärmetauscher geleitet, von dem das Wärmetauschermedium zur Aufbereitung abgeführt wird. Jeder Wärmetauscher, mit Ausnahme des obersten und des untersten Wärmetauschers, weist einen Einlass auf, der mit einem externen Wärmetauscher gekoppelt ist, sodass die Temperatur des Magmas in jeder Kristallisationsstufe in einem vorbestimmten Bereich gehalten wird. Dazu sind an der Innenseite des Gehäuses Temperatursensoren vorgesehen, die mit einem elektronischen Steuerungsmodul gekoppelt sind, das Ventile in Abhängigkeit von dem jeweiligen Temperatursignal öffnet oder schließt, um die Durchflussmengen und Temperaturen des Wärmetauschermediums einzustellen. Das Wärmeträgerfluid kann kälter oder wärmer als das im Bereich des Ventils befindliche Wärmetauschermediums sein.

Weiterhin ist aus der Veröffentlichung "technik-programm" der Braunschweigischen Maschinenbauanstalt AG ein Kühlungskristallisator bekannt, der aus standardisierten Kühlblockelementen besteht, in denen das Kühlmedium zwangsgeführt innerhalb von Rohrleitungen von unten nach oben durch einen stehenden Kühlungszylinder geleitet wird. Innerhalb des Zylinders wird Magma von oben nach unten aufgrund der Schwerkraft bewegt. Die Kühlblockelemente oszillieren in vertikaler Richtung, wobei die Kühlblockelemente in zwei Kreisen angeordnet sind, sodass entweder nur ein Kühlblockkreis oder beide Kühlblockkreise betrieben werden können. Sollte ein Kühlblockkreis ausfallen, kann der Kühlungskristallisator weiter betrieben werden. Die beiden Kreise sind hydraulisch in Reihe geschaltet.

Zwischen zwei Kühlblöcken eines Kühlblockkreises ist jeweils ein Kühlblock des anderen Kühlblockkreises angeordnet, die Ausnahme bilden die oberen und unteren Kühlblöcke.

Der Artikel von Michael Getaz et al "Recent develpoments in vertical cooling crystalliser design", 1. November 2011, Seiten 1 bis 8, XP055757943 betrifft Entwicklungen in dem Design vertikaler Kühlungskristallisatoren hinsichtlich der Behälterhöhen und Behälterdurchmesser, der Ausgestaltung der Kühlungsflächen, der Ausgestaltung der Rührelemente und deren Antriebe sowie der Kühlmittelführung.

Die DE 27 43 671 A1 betrifft einen Kristallisator aus einem länglichen Behälter mit darin angeordneten Kühlelementen und einer Einrichtung, die eine Relativbewegung zwischen der kristallisierbaren Flüssigkeit und den Kühlelementen bewirkt. Der längliche Behälter weist zumindest ein Bündel von ortsfesten, in einem gegenseitigen Abstand angeordneten Kühlrohren auf, die sich in Längserstreckung des Behälters erstrecken. Der Behälter enthält zumindest einen Flügel, der sich längs einer Welle erstreckt und an dieser befestigt ist. Die Welle erstreckt sich längs des Behälters und ist mit einer Einrichtung verbunden, um eine Oszillationsbewegung der Welle zu bewirken. Das Kühlmittel in den Kühlrohren und die kristallisierbare Flüssigkeit in dem Behälter werden im Gleichstrom durch den Kristallisator geführt.

Der Artikel von Mario Llanao-Restrepo "Modeling and simulation of vertical continous cooling crystallizers for the sugar industry ", Industrial & Engineering Chemistry Research, Bd. 44, Nummer 24, 1. November 2005, Seiten 9244 bis 9263, XP 05575 7940, ISSN: 0888-5885, betrifft die Modellierung und Simulation von kontinuierlich betriebenen, vertikalen Kühlungskristallisatoren für die Zuckerindustrie, in dem auch der oben erwähnte Kühlungskristallisator der Braunschweigischen Maschinenbauanstalt AG beschrieben ist.

Aufgabe der vorliegenden Erfindung ist es, einen Kühlungskristallisator sowie ein Verfahren zur Zuckerkristallisation bereitzustellen, mit denen eine verbesserte Ausbeute an Zuckerkristallen aus einem Magma mit möglichst geringem apparativen Aufwand erreicht werden kann.

Erfindungsgemäß wird diese Aufgabe durch eine Vorrichtung mit den Merkmalen des Hauptanspruches und ein Verfahren mit den Merkmalen des nebengeordneten Anspruchs gelöst. Vorteilhafte Ausgestaltungen und Weiterbildungen der Erfindung sind in den Unteransprüchen, der Beschreibung und den Figuren offenbart.

Der Kühlungskristallisator für Saccharose-Magma mit einem vertikal orientierten Behälter, der einen obenseitigen Einlass zum Zuführen und einen untenseitigen Auslass zum Abführen von Magma aufweist, mit mehreren, vertikal zueinander beabstandeten Kühlblöcken, wobei die Kühlblöcke von einem Wärmeträgerfluid durchströmt und mit einem Wärmetauscher gekoppelt sind, um Wärme aus dem Magma abzuführen, sieht vor, dass mehrere Kühlblöcke zu je einem Kühlpaket zusammengefasst und die Kühlpakete als getrennte Kühlkreise mit getrennten Wärmetauschern ausgebildet sind. Mit der Ausgestaltung des Kühlungskristallisator mit mehreren Kühlpaketen aus mehreren Kühlblöcken und deren thermischer und hydraulischer Trennung ist es möglich, sowohl unterschiedliche Kühlwassermengen als auch unterschiedliche Temperaturdifferenzen zwischen dem Magma und den Wärmetauschern bzw. dem jeweiligen Wärmeträgermedium einzustellen. Es ist somit möglich, bereichsweise eine Anpassung der Temperatur an den jeweiligen Sättigungsgrad in dem Magma und den Entzuckerungsgrad der Mutterlösung einzustellen. Durch die hydraulische Entkopplung ist es möglich, die jeweils erforderliche Menge des Wärmeträgerfluids, zum Beispiel Wasser, optimal einzustellen, sodass es möglich ist, während des Kühlprozesses zu jeder Zeit optimale Kristallisationsverhältnisse zu erreichen. Damit ist es möglich, bei gleicher Apparategröße einen höheren Magmadurchsatz oder aber eine geringere Apparategröße bei vorgegebener Durchsatzmenge zu erreichen. Auch bei größeren Durchsatzmengen wird der Druckverlust in der Leitung für das Wärmeträgerfluid nicht mehr zu einem begrenzenden Kriterium.

Neben der Einstellbarkeit der Durchsatzmengen durch die hydraulische Entkopplung ist durch die thermische Entkopplung mit den getrennten Wärmetauschern die Versorgung der Kühlpakete mit unterschiedlich temperiertem Wärmeträgerfluid möglich, sodass die Temperaturdifferenzen über die Kontaktlänge des Magmas mit dem jeweiligen Kühlpaket optimal an den jeweiligen Sättigungsgrad des Magmas angepasst werden können.

Eine Weiterbildung sieht vor, dass die Kühlpakete vertikal getrennt voneinander ausgebildet und innerhalb des Behälters angeordnet sind, sodass durch die räumliche Trennung und vertikale Beabstandung über die Transportstrecke des Magmas innerhalb des Behälters eine angepasste Temperaturdifferenz eingestellt werden kann.

Die Temperaturdifferenz zwischen dem Magma und dem jeweiligen Kühlpaket ist bevorzugt von oben nach unten abnehmend eingestellt. In dem obersten Kühlpaket ist somit die größte Temperaturdifferenz zwischen dem Magma und dem jeweiligen Kühlblock bzw. dem Wärmeträgerfluid vorhanden, in dem untersten Kühlpaket entsprechend die geringste Temperaturdifferenz. Dadurch wird den unterschiedlichen Sättigungsgraden und den in Abhängigkeit von den Temperaturen unterschiedlichen Kristallisationsgeschwindigkeiten Rechnung getragen. Bei bereits fortgeschrittenem Kristallwachstum bei niedrigen Magma-Temperaturen kann so eine langsame Abkühlgeschwindigkeit eingestellt werden.

Die Durchflussmenge des durch die Kühlpakete strömenden Wärmeträgerfluids ist vorteilhafterweise einstellbar, wobei die jeweils benötigte Durchflussmenge des Wärmeträgerfluids in Abhängigkeit von Sensordaten oder von Zustandsgrößen eingestellt werden kann. Dadurch ist es möglich, die Zuckerkristallisation innerhalb des Kühlungskristallisators zu steuern oder zu regeln. Ebenso ist vorteilhafterweise die Eintrittstemperatur des Wärmeträgerfluids in das jeweilige Kühlpaket getrennt von der Eintrittstemperatur in die anderen Kühlpakete einstellbar ausgebildet. Da sich die maximal mögliche Kristallwachstumsgeschwindigkeit mit abnehmender Reinheit des Magmas verringert, ist es vorteilhaft, wenn die Temperaturdifferenz über den Weg durch den Behälter von oben nach unten abnimmt und somit bei einer geringen Magmatemperatur auch eine geringe Temperaturdifferenz zu dem Wärmeträgerfluid vorhanden ist. Zum Ende der Kühlung sollte die Temperaturdifferenz zwischen dem Wärmeträgerfluid und dem Magma möglichst so eingestellt sein, dass die Übersättigung innerhalb der Mutterlösung die maximal mögliche Kristallwachstumsgeschwindigkeit ermöglicht.

Die Kühlblöcke und damit auch die Kühlpakete können vertikal verlagerbar in dem Behälter angeordnet und mit einem Antrieb gekoppelt sein, sodass die Kühlblöcke und Kühlpakete gemeinsam oder individuell angetrieben in dem Behälter bewegbar sind. Dazu können die Kühlpakete mit Hubrohren verbunden sein, die über Hydraulikzylinder angetrieben eine vorgegebene Strecke in vertikaler Richtung zurücklegen. In den Hubrohren wird das Kühlwasser zu den Kühlrohren in die jeweiligen Kühlpakete bzw. Kühlblöcke geführt und wieder abgeführt. Durch die vertikale Bewegung und Bewegbarkeit der Kühlblöcke und Kühlpakete innerhalb des Magmas wird zunächst eine verbesserte Temperaturverteilung sowie eine gleichmäßige Kühlung innerhalb des Magmas bewirkt. Darüber hinaus wird durch die Bewegung der Kühlpakete innerhalb des Magmas ein Reinigungseffekt an den Kühlblöcken erzielt, sodass Zuckerkristalle nicht an den Kühlrohren der Kühlpakete bzw. Kühlblöcke haften bleiben bzw. von diesen entfernt werden. Durch eine ausschließlich vertikale Bewegbarkeit der Kühlpakete wird zwar eine Relativbewegung zwischen den Kühlpaketen und dem Magma erzeugt, das Magma wird jedoch nur wenig durchmischt. Durch die oszillierende Vertikalbewegung werden großen Temperaturschwankungen in dem Magma und dadurch die Bildung von Feinkristallen verhindert. Eine kontinuierliche Temperaturabsenkung ist bei der vertikalen Beweglichkeit jedoch weiterhin gewährleistet.

Neben der thermischen und hydraulischen Trennung der Kühlpakete voneinander ist es vorteilhaft, wenn im Bereich zwischen zwei Kühlpaketen und/oder zwei Kühlblöcken ein Temperatursensor für das Magma angeordnet ist, um über die Temperatur des Magmas Informationen über den Kristallisationsprozess zu erhalten. Es können die Durchlaufgeschwindigkeiten des Magmas, Durchsatzmengen des Wärmeträgerfluids und die jeweiligen Temperaturen auf Grundlage der Sensordaten verändert werden, um einen optimalen Zuckerertrag zu erzielen. Insbesondere an dem Übergang zwischen zwei Kühlpaketen ist es vorteilhaft, einen Temperatursensor anzuordnen, um bereichsweise die entsprechenden Parameter einzustellen. Die Zusammenfassung der Kühlblöcke zu Kühlpaketen erleichtert die Anpassung der Parameter an den jeweiligen Kristallisationsfortschritt, ohne die Komplexität der Anlage über die Maßen zu erhöhen.

Eine Weiterbildung der Erfindung sieht vor, dass zumindest ein optischer Sensor in dem Behälter und/oder einer Rohrleitung zur Erfassung einer Kristallbildung angeordnet ist. Die Sensordaten des optischen Sensors können allein oder zusammen mit anderen Sensordaten, beispielsweise den Daten des Temperatursensors oder der Temperatursensoren dazu dienen, die die Zuckerkristallisation innerhalb des Kühlungskristallisators zu steuern oder zu regeln. Dies kann z.B. durch die Veränderung des Durchflussmengen an Magma und/oder Wärmeträgerfluid, Veränderungen der Temperaturen oder durch andere Änderungen an Betriebsparametern erfolgen, je nachdem ob festgestellt wird, dass sich neue Zuckerkristalle gebildet haben oder nicht. Werden beispielsweise unerwünscht gebildete Neukristalle im Kristallisator mit Hilfe eines optischen Sensors erfasst, können diese in einem nachgeordneten Mischer z.B. durch Zugabe von heißem Medium, wie zum Beispiel heißer Melasse, wieder aufgelöst werden. Zusätzlich können andere Parameter verstellt werden, um die Bildung von Neukristallen zu verhindern.

Der Kühlungskristallisator mit zwei Kühlkreisen ist insbesondere für die Verarbeitung von Saccharose-Magma ausgebildet, grundsätzlich ist es jedoch auch möglich, Fructose- oder Glucose-Magma mit einem solchen Kühlungskristallisator zu verarbeiten. Insbesondere wenn ein Sensor zur Erfassung der Kristallbildung, z.B. ein optischer Sensor, eingebaut ist, ist die Steuerung und/oder Regelung des Kristallisationsprozesses erleichtert.

Das Verfahren zur Zuckerkristallisation und Abkühlung von Zuckermagma in einem Kühlungskristallisator, wie oben beschrieben ist, sieht vor, dass in Strömungsrichtung des Magmas von oben nach unten zwischen den Kühlblöcken und dem Magma eine abnehmende Temperaturdifferenz eingestellt wird. Die Temperaturdifferenz wird für jedes Kühlpaket vorteilhafterweise individuell eingestellt, wobei die Temperaturdifferenz in dem obersten Kühlpaket am größten und im untersten Kühlpaket am geringsten sein sollte. Die treibende Temperaturdifferenz zu Beginn der Kühlung des Magmas ist bevorzugt im Bereich des oberen Kühlpaketes am größten, da dort der Muttersirup mit der größten Reinheit vorhanden ist und somit eine hohe Kristallwachstumsgeschwindigkeit möglich ist. Am Ende der Kühlungskristallisation verfügt der Muttersirup über eine vergleichsweise geringe Reinheit, wodurch eine langsame Abkühlung und eine geringe Temperaturdifferenz prozesstechnisch vorteilhaft werden. Das Verfahren ist insbesondere auf Saccharose-Magma anwendbar, kann aber auch für Glucose- oder Fructose-Magma eingesetzt werden.

Die Temperaturdifferenz zwischen dem Wärmeträgerfluid und dem Magma am obersten Kühlpaket wird zwischen 15 K und 20 K eingestellt, während die Temperaturdifferenz in einem vertikal darunter angeordneten Kühlpaket zwischen 8 K und 12 K eingestellt wird.

In jedem Bereich der Kühlpakete können unterschiedliche Übersättigungen des Magmas eingestellt werden, was durch eine Temperaturführung sowie das Einstellen der Durchflussgeschwindigkeit des Magmas durch den Behälter erfolgen kann. Die Durchflussgeschwindigkeit des Magmas kann beispielsweise durch Öffnen oder Schließen eines Durchlasses, eines Schieber oder eines Ventils an dem untenseitigen Auslass variiert werden.

Zur Vergleichmäßigung der Kühlung wird vorteilhafterweise das Wärmeträgerfluid im Gegenstrom durch die Kühlblöcke geleitet, sodass vom Einlass bis zum Auslass aus den jeweiligen Kühlblöcken und Kühlpaketen eine gleichmäßige Temperaturdifferenz über die Länge des Kühlpakets erreicht werden kann. Dadurch ist es beispielsweise möglich, dass die Temperaturdifferenz zwischen dem Magma und den Kühlblöcken in einem Kühlpaket konstant gehalten wird.

In einer weiteren Ausführungsform kann die zuvor beschriebene Temperaturdifferenz zwischen dem Magma und den Kühlblöcken in einem Kühlpaket variieren oder variabel eingestellt werden und über die Verweilzeit des Magmas in dem Kühlungskristallisator beispielsweise abnehmen. Dadurch kann beispielsweise die Übersättigung des Magmas gleichmäßiger eingestellt und der Kristallzuwachs vergrößert werden.

Nachfolgend werden Ausführungsbeispiele der Erfindung anhand der beigefügten Figuren näher erläutert. Es zeigen:
- Figur 1 -: eine schematische Darstellung eines Kühlungskristallisators in Teilschnittdarstellung;
- Figur 2 -: eine schematische Darstellung eines Kühlblockes;
- Figur 3 -: ein Schaltbild eines Kühlungskristallisators;
- Figur 4a -: der Temperaturverlauf mit konstanten Temperaturdifferenzen über die Verweilzeit des Magmas im Kühlungskristallisator;
- Figur 4b -: der Temperaturverlauf mit variierenden Temperaturdifferenzen über die Verweilzeit des Magmas im Kühlungskristallisator;
- Figur 5a -: die Übersättigung und der Kristallzuwachs mit konstanten Temperaturdifferenzen über die Verweilzeit des Magmas im Kühlungskristallisator; sowie
- Figur 5b -: die Übersättigung und der Kristallzuwachs mit variierenden Temperaturdifferenzen über die Verweilzeit des Magmas im Kühlungskristallisator.

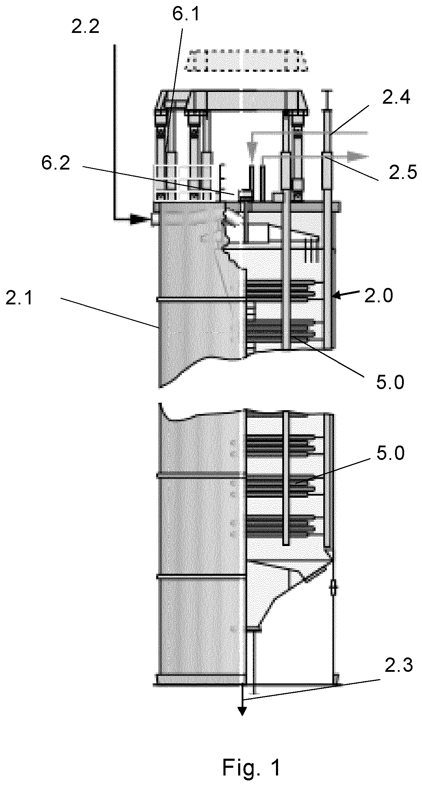

In der Figur 1 ist in einer schematischen Schnittdarstellung ein Kühlungskristallisator 2.0 gezeigt, der einen vertikal orientierten Behälter 2.1 aufweist, der einen obenseitigen Einlass 2.2 und einen untenseitigen Auslass 2.3 aufweist. Durch den Einlass 2.2 wird Magma aus den Vorstufen der Zuckerkristallisation in den Behälter 2.1 eingeführt. Die Vorstufen sind beispielsweise die erste Kristallfußbildung, die Weißzuckererzeugung, die Rohzuckererzeugung und die Nachproduktzuckererzeugung. Der Nachproduktzucker wird beispielsweise in einem Verdampfungs-Kristallisationsturm vorbereitet, in dem ein Reinheitsabbau des Muttersirups durchgeführt und ein Hauptteil der Nachproduktzuckerkristallmasse erzeugt wird. Im Anschluss daran wird das Magma in dem Kühlungskristallisator 2.0 gekühlt. Das Ziel besteht darin, dem Muttersirup so viel Saccharose wie möglich durch Vergrößerung der bereits vorhandenen Kristalle zu entziehen. Es handelt sich hierbei um die letzte Entzuckerungsstufe des Muttersirups, die mit dem Kühlungskristallisator 2.0 kontinuierlich durchgeführt werden kann. Der Behälter 2.1 wird vollständig über den Einlass 2.2 mit Magma aus dem Verdampfungs-Kristallisationsturm befüllt. Über einen Motor 6.2 wird ein Verteiler angetrieben, der sich dreht und das Magma aus dem Einlass 2.2 gleichmäßig über die gesamte Oberfläche des Magmas innerhalb des Behälters 2.1 verteilt. Innerhalb des Behälters 2.1, der mehrere hundert Kubikmeter Betriebsvolumen aufweisen kann, sind in Ebenen verteilt vertikal übereinander zueinander beabstandete Kühlblöcke 5.0 angeordnet, um das warme Magma aus dem Verdampfungs-Kristallisationsturm abzukühlen. Durch die Kühlblöcke 5.0, die bevorzugt in gleichmäßigen Abständen zueinander angeordnet sind, wird über einen Wassereinlass 2.4 Kühlwasser gepumpt, wobei das Kühlwasser als Wärmeträgerfluid im Gegenstrom zu dem Strom des Magmas durch den Kühlungskristallisator 2.0, also von unten nach oben geleitet wird. Das kalte Kühlwasser wird somit zunächst durch den untersten Kühlblock 5.0 gepumpt und von dort nach oben durch die einzelnen Kühlblöcke 5.0 bis zum obenseitigen Wasserauslass 2.5. Von dort wird das erwärmte Wärmeträgerfluid oder Kühlwasser aufbereitet, insbesondere abgekühlt.

Das gesamte Kühlsystem mit den Kühlblöcken 5.0 und den Kühlwasserleitungen, die als Rohre ausgebildet sind, oszilliert in vertikaler Richtung. Die Bewegung wird über Antriebe 6.1, vorzugsweise in Gestalt von Hydraulikzylindern, durchgeführt. Die Hydraulikzylinder 6.1 sind auf dem Deckel des Kühlungskristallisators 2.0 vorzugsweise symmetrisch angeordnet. Durch das Heben und Senken der Kühlblöcke 5.0, deren Aufbau weiter unten erläutert werden wird, ergibt sich ein guter Selbstreinigungseffekt, um mögliche Verkrustungen an den Kühlflächen zu vermeiden. Auch hochviskose Magmen können somit problemlos verarbeitet werden.

Durch die vertikale Aufstellung des Behälters 2.1 ergibt sich ein geringer Flächenbedarf, darüber hinaus können durch eine modulare Ausgestaltung des Behälters 2.1 Anpassungen der Anlagen an unterschiedliche Durchsatzmengen leicht realisiert werden. Aufgrund der gleichmäßigen Relativbewegung des Magmas zu den Kühlblöcken ist ein gleichmäßiger und guter Wärmeübergang zwischen dem Magma und dem Kühlmedium oder Wärmeträgerfluid, insbesondere Kühlwasser, gegeben. Die Austrittstemperatur an dem untenseitigen Auslass 2.3 kann sehr genau eingestellt werden, die übliche Eintrittstemperatur liegt zwischen 60 °C und 85 °C, je nach Vorprozess, die Auslasstemperatur wird üblicherweise im Bereich von ungefähr 40 °C liegen.

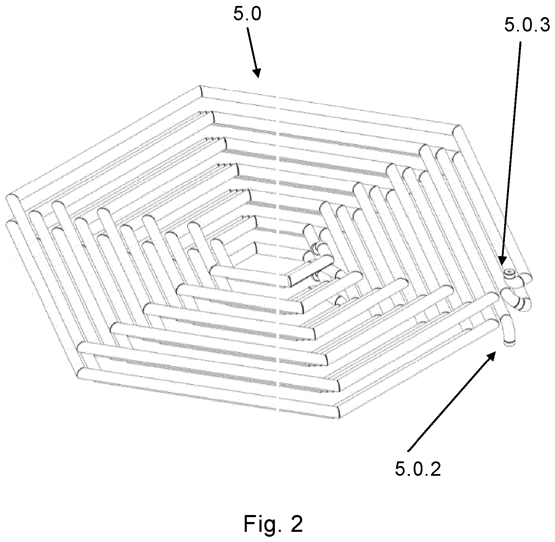

In der Figur 2 ist beispielhaft ein Kühlblock 5.0 dargestellt, der aus geraden Rohrstücken aufgebaut ist. Die Rohre sind sechseckig angeordnet und in einer Spiralform in zwei oder mehr vertikalen Ebenen geführt angeordnet. Die Rohre selbst sind in einem nicht dargestellten, im Wesentlichen runden Rahmen angeordnet und auf radial nach außen ragenden Trägern befestigt, die über die nicht dargestellten Hubeinrichtungen vertikal angehoben oder auch abgesenkt werden können. Das Kühlwasser oder Wärmeträgerfluid wird an einem untenseitigen Kühlblockeinlass 5.0.2 zugeführt. Der Kühlblockeinlass 5.0.2 ist im dargestellten Ausführungsbeispiel an einem äußeren Rohr angeordnet, von dort wird die Kühlflüssigkeit spiralförmig durch die Rohre nach innen gepumpt und an einem innenseitigen Durchgang in die nächste, vertikal darüber angeordnete Kühlrohrebene geführt, in der das Kühlwasser von innen nach außen durch die Rohre gepumpt wird. Von dem obenseitigen Kühlblock-Auslass 5.0.3 wird dann das Wärmeträgerfluid oder Kühlwasser in einen darüber angeordneten Kühlblock 5.0 geleitet.

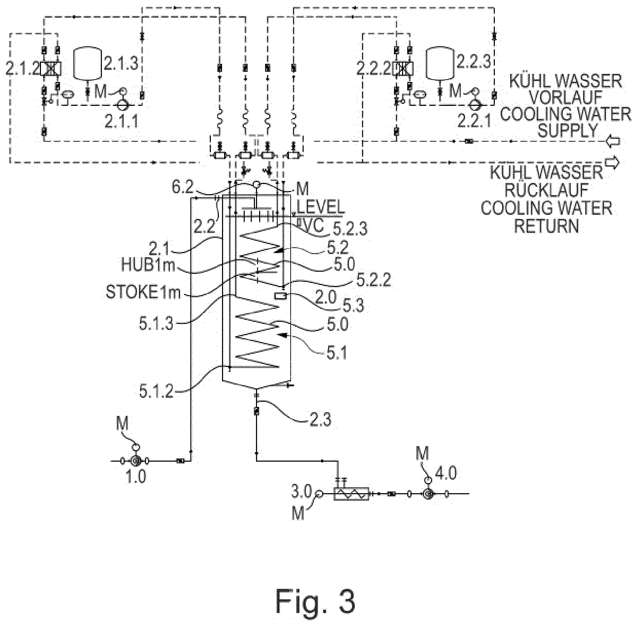

In der Figur 3 ist in einem Schaltbild ein Kühlungskristallisator 2.0 mit den wesentlichen Komponenten dargestellt. Über eine Magmapumpe 1.0 wird abzukühlendes Magma aus dem Verdampfungs-Kristallisator zu dem obenseitigen Magmaeinlass 2.2 gepumpt. Über einen nicht näher dargestellten Verteiler, der durch den Motor 6.2 angetrieben wird, wird das abzukühlende Magma gleichmäßig auf der Oberfläche des bereits innerhalb des Behälters 2.1 befindlichen Magmas verteilt. Ein Füllstandsensor kann mit einer nicht dargestellten Steuerung gekoppelt sein, um einen gleichmäßigen Füllstand des Behälters 2.1 zu gewährleisten. Die Zufuhr über die Magmapumpe 1.0 entspricht der Abfuhr des fertig kristallisierten und abgekühlten Magmas durch den Auslass 2.3 an der unteren Seite des Behälters 2.1. Von dem Auslass 2.3 wird das abgekühlte Magma der Weiterverarbeitung zugeführt, beispielsweise einer entsprechenden Zentrifugeneinrichtung. Dies erfolgt über eine Magmapumpe 4.0, der ein Melasse-Magma-Mischer 3.0 vorgeordnet sein kann.

Innerhalb des Behälters 2.1 sind mehrere Kühlblöcke 5.0 angeordnet. In dem Schaubild der Figur 3 sind diese als Zick-Zack-Linie dargestellt, sie haben insbesondere eine Gestalt, wie sie in der Figur 2 beschrieben worden ist. Abweichende Formgebungen, beispielsweise eine echte Spiralform oder eine abweichende Eckenzahl bei einem polygonalen Aufbau, sind ebenso möglich wie Variationen hinsichtlich der Rohrebenen pro Kühlblock 5.0. Die Kühlblöcke 5.0 in dem dargestellten Ausführungsbeispiel der Figur 3 sind zu zwei Kühlpaketen 5.1, 5.2 zusammengefasst. Das erste Kühlpaket 5.1 ist unterhalb des zweiten Kühlpakets 5.2 angeordnet. Die Angaben "oberhalb" und "unterhalb" beziehen sich jeweils auf eine vertikale Orientierung oder die Schwerkraftrichtung. Jedes Kühlpaket 5.1, 5.2 weist einen eigenen Kühlwassereinlass 5.1.2, 5.2.2 und einen eigenen Kühlwasserauslass 5.1.3, 5.2.3 auf, von dem aus das Kühlwasser oder Wärmeträgerfluid aus dem Behälter 2.1 abgeführt wird. Der Kühlwasserauslass 5.1.3 des ersten Kühlpaketes 5.1 liegt unterhalb oder auf gleicher Höhe des Kühlwassereinlasses 5.2.2 des darüberliegenden Kühlpaketes, im dargestellten Ausführungsbeispiel des zweiten Kühlpaketes 5.2. Neben der dargestellten Ausführungsform mit zwei Kühlpaketen 5.1, 5.2 können auch drei oder mehr Kühlpakete innerhalb des Behälters 2.1 angeordnet sein. Jedes Kühlpaket 5.1, 5.2 wird über eine eigene Kühlwasserpumpe 2.1.1, 2.2.1 mit Kühlwasser versorgt. Ventile in den Zuführleitungen regeln die zugeführte Kühlwassermenge. Von dem jeweiligen Kühlwasserauslass 5.1.3, 5.2.3 wird das erwärmte Kühlwasser einem eigenen Wärmetauscher 2.1.2, 2.2.2 zugeführt. Ebenfalls ist jedem Kühlkreislauf ein separater Druckausgleichsbehälter 2.1.3, 2.2.3 zugeordnet, aus dem Kühlwasser entnommen wird. Jedes Kühlpaket 5.1, 5.2 weist somit einen eigenständigen Kühlkreislauf mit einer eigenen Kühlwasserpumpe 2.1.1, 2.2.1, einem eigenen Wärmetauscher 2.1.2, 2.2.2 und einem eigenen Druckausgleichbehälter 2.1.3, 2.2.3 auf, sodass beide Kühlpakete 5.1, 5.2 thermisch und hydraulisch voneinander getrennt sind. Beide Kühlpakete 5.1, 5.2 können gemeinsam über die nicht dargestellten Hydraulikzylinder 6.1 angehoben und gegebenenfalls abgesenkt werden. Das Absenken kann auch über Schwerkraft erfolgen. Das Absenken der Kühlpakete 5.1, 5.2 innerhalb des Magmas erfolgt schneller als die Absenkgeschwindigkeit des Magmas innerhalb des Behälters. Die Absenkschnelligkeit des Magmas innerhalb des Behälters 2.1 wird über ein nicht näher beschriebenes Ventil oder einen Steuerschieber an dem Auslass 2.3 oder durch die Pumpe 4.0 bestimmt. Grundsätzlich ist es auch möglich, dass die einzelnen Kühlpakete 5.1, 5.2 unabhängig voneinander eine Hubbewegung oder Absenkbewegung ausführen, verfahrenstechnisch vorteilhaft ist jedoch, wenn eine möglichst geringe Durchmischung unterschiedlich temperierten Magmas stattfindet, damit der Kristallisationsvorgang nicht gestört wird und eine Bildung von neuen, unerwünschten Kristallen vermieden wird. Die Bildung von neuen, unerwünschten Kristallen wird dabei vorzugsweise mit einem oder mehreren optischen Sensoren erfasst, die im Behälter 2.1 und/oder in angrenzenden Rohrleitungen an geeigneter Stelle angeordnet sind. Solche Sensoren sind dazu geeignet, eine entsprechende Regelung für den optimierten Betrieb ohne Neukristallbildung zu realisieren. Dabei können unerwünscht gebildete Neukristalle im Kristallisator mit Hilfe eines optischen Sensors erfasst und in einem nachgeordneten Mischer, wie dem Melasse-Magma-Mischer 3.0 durch Zugabe von heißem Medium, wie zum Beispiel heißer Melasse, in einem Regelkreis wieder aufgelöst werden.

Zwischen den beiden Kühlpaketen 5.1, 5.2 ist ein Temperatursensor 5.3 angeordnet, der die Übergangstemperatur des Magmas zwischen den beiden Kühlpaketen 5.1, 5.2 misst. Der Temperatursensor 5.3 ist mit einer nicht dargestellten Steuerungseinrichtung gekoppelt, die ebenfalls mit den Pumpen 2.1.1, 2.2.1 gekoppelt ist. Auch die Temperatur der Kühlflüssigkeit oder des Wärmeträgermediums wird überwacht, um die Vorlauftemperatur des Wärmeträgerfluids zu berücksichtigen und gegebenenfalls verändern zu können. Über eine Veränderung der Vorlauftemperatur und/oder eine Veränderung der Menge des Wärmeträgerfluids oder Kühlwassers ist es möglich, unterschiedliche Temperaturdifferenzen zwischen dem Magma innerhalb des Behälters 2.1 und den Kühlpaketen 5.1, 5.2 beziehungsweise dem Kühlwasser einzustellen. Durch die vertikal getrennte Anordnung der Kühlpakete 5.1, 5.2 ist es möglich, die Temperaturdifferenzen in Abhängigkeit von der Temperatur des Magmas einstellen zu können. Die Kristallisationsgeschwindigkeit des Magmas ändert sich mit dem Reinheitsgrad und der Temperatur des Magmas. Wird über die gesamte Höhe des Kühlungskristallisators 2.0 Kühlwasser aus nur einem Kühlkreislauf im Gegenstrom durch die Kühlblöcke 5.0 gepumpt, kann die Temperaturdifferenz nur am unteren Kühlflüssigkeitseinlass 5.1.2, 5.2.2 eingestellt werden. Die Temperaturdifferenz zwischen den Kühlpaketen 5.1, 5.2 und dem Magma im Behälter 2.1 kann durch Veränderung der Durchflussmengen der Wärmeträgerfluide beeinflusst werden. Eine Erhöhung der Menge des Wärmeträgerfluids kann jedoch nicht beliebig erfolgen, da der Druckverlust in der Leitung des Wärmeträgerfluids im Verhältnis zu der Geschwindigkeit des Wärmeträgerfluids in den Rohren der Kühlblöcke 5.0 ansteigt, sodass eine technische Grenze von ca. 10bar nicht überschritten werden kann. Diese Problematik kann mit den hydraulisch und thermisch entkoppelten Kühlpaketen 5.1, 5.2, die vertikal getrennt angeordnet sind, vermieden werden, da bei zwei hydraulisch getrennten, gleichgroßen Kühlkreisläufen der Druckverlust annähernd halbiert wird. Weiterhin ist es mit den beiden oder weiteren Kühlpaketen möglich, zu jeder Zeit optimale Prozessverhältnisse zu erreichen. Überraschenderweise hat sich herausgestellt, dass mit dem zuvor beschriebenen Konzept für die bis zu mehreren 100m³ großen Behälter und dem nicht bekannten Strömungsverhalten des Magmas in den sehr hohen und schlanken Behältern 2.1 eine Intensivierung der Kühlleistung mit einhergehender Reduzierung der Anzahl von Kühlblöcken im Vergleich zum Stand der Technik erfolgen kann. Damit verbunden kann die Baugröße des Behälters 2.1 reduziert werden. Alternativ kann bei gleichbleibender Baugröße des Kühlungskristallisators die Durchsatzmenge des Magmas erhöht werden. Ebenfalls ist es möglich, Kühlungskristallisatoren modular aufzubauen und die Kühlungsverhältnisse an die Verweildauern in dem Behälter anzupassen, wobei der Druckverlust in der Leitung des Wärmeträgerfluids nur noch ein untergeordnetes Kriterium ist.

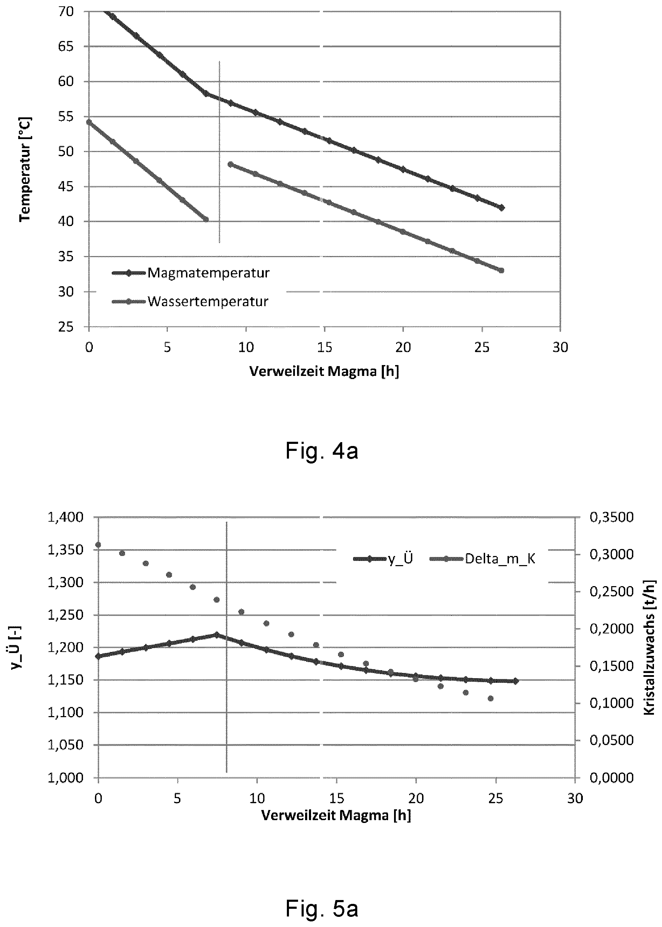

In der Figur 4a ist über die Verweilzeit des Magmas der Temperaturverlauf bei einem zweistufigen Kühlungskristallisator mit konstanten Temperaturdifferenzen schematisch dargestellt. Die Temperatur des Magmas ist in der oberen Kurve dargestellt, die Temperatur des Kühlwassers als Wärmeträgerfluid anhand der unteren beiden Geraden. Die Magma-Eintrittstemperatur beträgt ungefähr 75 °C bis 80 °C. Über eine mittlere Verweilzeit von ungefähr 27 Stunden wird das Magma auf circa 42 °C abgekühlt. Die Verweilzeit ist die mittlere Aufenthaltszeit des Magmas oder der Kristallsuspension in dem Kühlungskristallisator, die Temperatur wird an dem Ort gemessen, wo das Magma oder die Kristallsuspension die entsprechende mittlere Aufenthaltszeit aufweist. Die Austrittstemperatur des Kühlwassers als Wärmeträgerfluid aus dem unteren Kühlpaket 5.1 beträgt ungefähr 48 °C, die Austrittstemperatur des zweiten, oberen Kühlpaketes 5.2 beträgt ungefähr 55 °C. Die Eintrittstemperatur des Wärmeträgerfluids des oberen Kühlpaketes 5.2 beträgt 40 °C, die Eintrittstemperatur des Wärmeträgerfluids des unteren, ersten Kühlpaketes 5.1 beträgt 34 °C. Aufgrund der Gegenstromführung sinkt die Magmatemperatur und die Temperatur des Wärmeträgerfluids steigt während des Durchströmens durch den Behälter 2.1. Der Figur 4a ist zu entnehmen, dass die Temperaturdifferenz zwischen dem Magma und dem Wärmeträgerfluid für die beiden Kühlpakete 5.1, 5.2 unterschiedlich ist. Für das untere Kühlpaket 5.1 beträgt die Temperaturdifferenz circa 8 K und ist im Wesentlichen konstant über die gesamte Kontaktlänge oder Kontaktdauer des Magmas mit dem unteren Kühlpaket 5.1. Die Temperaturdifferenz zwischen der Magmatemperatur und der Temperatur des Wärmeträgerfluids des oberen, zweiten Kühlpaketes 5.2 beträgt circa 18 K, kann jedoch auch anders eingestellt werden, beispielsweise auf 12 K bis 15 K. Auch hier ist die Temperaturdifferenz über die gesamte Verweildauer oder Kontaktstrecke konstant.

In der Figur 5a sind über die Verweilzeit des Magmas mit konstanten Temperaturdifferenzen mit der durchgezogenen Linie die Übersättigung Y_{Ü} des Magmas sowie der Kristallzuwachs ΔmK in der gepunkteten Linie dargestellt. Für die Kühlung und Kristallisation im oberen Bereich des Kühlungskristallisators 2.0 steigt die Übersättigung von etwa 1,18 auf etwa 1,22 linear an. Die Übersättigung ist eine dimensionslose Konzentrationsdifferenz und ist definiert als die Konzentration des gelösten, zu kristallisierenden Stoffes in der flüssigen Phase der Kristallsuspension im Verhältnis zu der Gleichgewichtskonzentration. Der Kristallzuwachs ist die Menge der kristallisierenden Komponente, die aus der flüssigen Phase auf das bestehende Kristallisat aufgewachsen ist. Der Kristallzuwachs ist über die Höheneinheit des Kristallisators aufgetragen, vorliegend ist eine Höheneinheit der Abstand zwischen zwei Kühlblöcken mit dem dazugehörigen Magmavolumen. Die Übersättigung nimmt nach ungefähr acht Stunden oder an dem Übergang zwischen dem oberen Kühlpaket 5.2 und dem unteren Kühlpaket 5.1 kontinuierlich ab und sinkt am Ende auf einen Wert von 1,149. Dies ergibt sich aus der zunehmenden Aufkristallisation, sodass die Kristallsuspension bei zunehmender Abkühlung und Verweildauer einen zunehmend geringeren Saccharoseanteil aufweist. Der Kristallzuwachs ΔmK beträgt im oberen Kühlpaket 5.2 anfangs ungefähr 0,31 und fällt bei zunehmender Verweilzeit nach Kontakt mit dem unteren, ersten Kühlpaket 5.1 auf einen Wert von 0,11 ab, das Kristallwachstum verlangsamt sich somit.

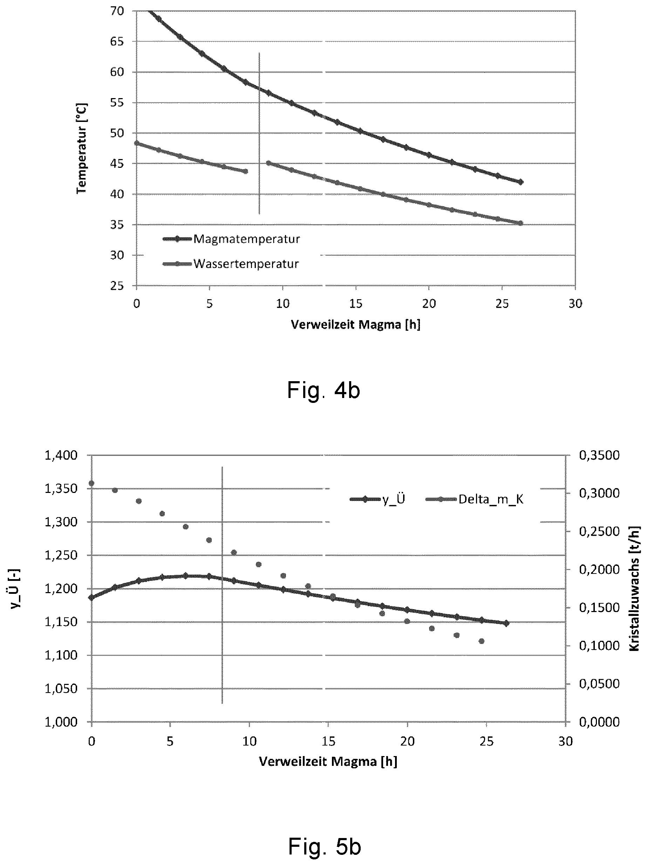

In der Figur 4b ist über der Verweilzeit des Magmas der Temperaturverlauf bei einem zweistufigen Kühlungskristallisator mit variierenden Temperaturdifferenzen schematisch dargestellt. Die Temperatur des Magmas ist in der oberen Kurve dargestellt, die Temperatur des Kühlwassers als Wärmeträgerfluids anhand der unteren beiden Kurven. Die Magma-Eintrittstemperatur beträgt ungefähr 75 °C bis 80 °C. Über eine mittlere Verweilzeit von ungefähr 27 Stunden wird das Magma auf circa 42 °C abgekühlt. Die Austrittstemperatur des Kühlwassers als Wärmeträgerfluid aus dem unteren Kühlpaket 5.1 beträgt ungefähr 45 °C, die Austrittstemperatur des zweiten, oberen Kühlpaketes 5.2 beträgt ungefähr 48°C. Die Eintrittstemperatur des Wärmeträgerfluids des oberen Kühlpaketes 5.2 beträgt 44 °C, die Eintrittstemperatur des Wärmeträgerfluids des unteren, ersten Kühlpaketes 5.1 beträgt 35 °C. Der Figur 4b ist zu entnehmen, dass die Temperaturdifferenz zwischen dem Magma und dem Wärmeträgerfluid für die beiden Kühlpakete 5.1, 5.2 unterschiedlich ist und sich während der Verweilzeit verändert. Für das untere Kühlpaket 5.1 beträgt die Temperaturdifferenz zwischen circa 7 K am Eintritt 5.1.2 und ca. 11 K am Austritt 5.1.3. Die Temperaturdifferenz zwischen der Magmatemperatur und der Temperatur des oberen, zweiten Kühlpaketes 5.2 beträgt zwischen circa 15 K am Eintritt 5.2.2 und ca. 24 K am Austritt 5.2.3.

In der Figur 5b sind über der Verweilzeit des Magmas mit variierenden Temperaturdifferenzen mit der durchgezogenen Linie die Übersättigung Y_{Ü} des Magmas sowie der Kristallzuwachs ΔmK in der gepunkteten Linie dargestellt. Für die Kühlung und Kristallisation im oberen Bereich des Kühlungskristallisators 2.0 steigt die Übersättigung von etwa 1,18 auf etwa 1,22 degressiv an. Die Übersättigung nimmt nach ungefähr acht Stunden oder an dem Übergang zwischen dem oberen Kühlpaket 5.2 und dem unteren Kühlpaket 5.1 kontinuierlich ab und sinkt am Ende auf einen Wert von 1,148. Der Kristallzuwachs ΔmK beträgt im oberen Kühlpaket 5.2 ungefähr 0,31 und fällt bei zunehmender Verweilzeit nach Kontakt mit dem unteren, ersten Kühlpaket 5.1 auf einen Wert von 0,11 ab, das Kristallwachstum verlangsamt sich somit.

## Patentansprüche

1. Kühlungskristallisator (2.0) für Saccharose-Magma in einem vertikal orientierten Behälter (2.1), der einen obenseitigen Einlass (2.2) zum Zuführen und einen untenseitigen Auslass (2.3) zum Abführen von Magma aufweist, mit mehreren, vertikal zueinander beabstandeten Kühlblöcken (5.0), wobei die Kühlblöcke (5.0) von einem Wärmeträgerfluid durchströmt und mit einem Wärmetauscher (2.1.2; 2.2.2) gekoppelt sind, um Wärme aus dem Magma abzuführen, **dadurch gekennzeichnet, dass** mehrere Kühlblöcke (5.0) zu je einem Kühlpaket (5.1; 5.2) zusammengefasst und zumindest zwei Kühlpakete (5.1; 5.2) als getrennte Kühlkreise mit getrennten Wärmetauschern (2.1.2; 2.2.2) ausgebildet und thermisch und hydraulisch voneinander getrennt sind.

2. Kühlungskristallisator nach Anspruch 1, **dadurch gekennzeichnet, dass** die Kühlpakete (5.1; 5.2) vertikal getrennt ausgebildet sind.

3. Kühlungskristallisator nach Anspruch 1 oder 2, **dadurch gekennzeichnet, dass** die Temperaturdifferenz zwischen dem Magma und dem jeweiligen Kühlpaket (5.1; 5.2) von oben nach unten abnehmend eingestellt ist.

4. Kühlungskristallisator nach einem der voranstehenden Ansprüche, **dadurch gekennzeichnet, dass** die Durchflussmengen des durch die Kühlpakete (5.1; 5.2) strömenden Wärmeträgerfluids getrennt einstellbar sind.

5. Kühlungskristallisator nach einem der voranstehenden Ansprüche, **dadurch gekennzeichnet, dass** die Eintrittstemperatur des Wärmeträgerfluids in das jeweilige Kühlpaket (5.1; 5.2) getrennt einstellbar ist.

6. Kühlungskristallisator nach einem der voranstehenden Ansprüche, **dadurch gekennzeichnet, dass** die Kühlblöcke (5.0) vertikal verlagerbar in dem Behälter (2.1) angeordnet und mit einem Antrieb (6.1) gekoppelt sind.

7. Kühlungskristallisator nach einem der voranstehenden Ansprüche, **dadurch gekennzeichnet, dass** im Bereich zwischen zwei Kühlpaketen (5.1; 5.2) und/oder Kühlblöcken (5.0) ein Temperatursensor (5.3) angeordnet ist.

8. Kühlungskristallisator nach einem der voranstehenden Ansprüche, **dadurch gekennzeichnet, dass** zumindest ein optischer Sensor in dem Behälter (2.1) und/oder einer Rohrleitung zur Erfassung einer Neukristallbildung angeordnet ist.

9. Verfahren zur Zuckerkristallisation und Abkühlung von Zucker-Magma in einem Kühlungskristallisator nach einem der Ansprüche 1 bis 8, **dadurch gekennzeichnet, dass** von oben nach unten zwischen den Kühlblöcken (5.0) und dem Magma eine abnehmende Temperaturdifferenz eingestellt wird, indem in dem obersten Kühlpaket (5.2) eine Temperaturdifferenz zwischen 15K und 20K und in einem vertikal darunter angeordnetem Kühlpaket (5.1) einer Temperaturdifferenz zwischen 8K und 12K eingestellt wird.

10. Verfahren nach Anspruch 9, **dadurch gekennzeichnet, dass** für jedes Kühlpaket (5.1; 5.2) unterschiedliche Übersättigungen des Magmas eingestellt werden.

11. Verfahren nach einem der Ansprüche 9 bis 10, **dadurch gekennzeichnet, dass** das Wärmeträgerfluid im Gegenstrom durch die Kühlblöcke (5.0) geleitet wird.

12. Verfahren nach einem der Ansprüche 9 bis 11, **dadurch gekennzeichnet, dass** die Temperaturdifferenz zwischen dem Magma und den Kühlblöcken (5.0) in einem Kühlpaket (5.1; 5.2) konstant gehalten oder variabel eingestellt wird.

13. Verfahren nach einem der Ansprüche 9 bis 12, **dadurch gekennzeichnet, dass** eine Neukristallbildung durch zumindest einen optischen Sensor in dem Behälter (2.1) und/oder einer Rohrleitung erfasst und die Neukristalle entfernt und/oder auf Basis der Sensordaten Betriebsparameter verändert werden.

## Claims

1. A cooling crystallizer (2.0) for sucrose magma in a vertically oriented container (2.1), which has an inlet (2.2) at the top for feeding in magma and an outlet (2.3) at the bottom for discharging magma, having a plurality of cooling blocks (5.0) which are vertically spaced apart from one another, wherein a heat transfer fluid flows through the cooling blocks (5.0) and the cooling blocks are coupled with a heat exchanger (2.1.2; 2.2.2) in order to dissipate heat from the magma, **characterized in that** a plurality of cooling blocks (5.0) are combined to form a cooling pack (5.1; 5.2) and at least two cooling packs (5.1; 5.2) are configured as separate cooling circuits with separate heat exchangers (2.1.2; 2.2.2) and are thermally and hydraulically separate from one another.

2. The cooling crystallizer as claimed in claim 1, **characterized in that** the cooling packs (5.1; 5.2) are configured so as to be vertically separate.

3. The cooling crystallizer as claimed in claim 1 or 2, **characterized in that** the temperature difference between the magma and the respective cooling pack (5.1; 5.2) is adjusted so that it decreases from top to bottom.

4. The cooling crystallizer as claimed in one of the preceding claims, **characterized in that** the flow rates of the heat transfer fluid flowing through the cooling packs (5.1; 5.2) can be adjusted separately.

5. The cooling crystallizer as claimed in one of the preceding claims, **characterized in that** the inlet temperature of the heat transfer fluid into the respective cooling pack (5.1; 5.2) can be adjusted separately.

6. The cooling crystallizer as claimed in one of the preceding claims, **characterized in that** the cooling blocks (5.0) are arranged in the container (2.1) so as to be vertically displaceable and are coupled with a drive (6.1).

7. The cooling crystallizer as claimed in one of the preceding claims, **characterized in that** a temperature sensor (5.3) is arranged in the region between two cooling packs (5.1; 5.2) and/or cooling blocks (5.0).

8. The cooling crystallizer as claimed in one of the preceding claims, **characterized in that** at least one optical sensor is arranged in the container (2.1) and/or in a pipeline for detecting the formation of new crystals.

9. A method for sugar crystallization and cooling of sugar magma in a cooling crystallizer as claimed in one of the claims 1 to 8, **characterized in that** a decreasing temperature difference between the cooling blocks (5.0) and the magma is adjusted from top to bottom by adjusting a temperature difference of between 15 K and 20 K in the uppermost cooling pack (5.2) and adjusting a temperature difference of between 8 K and 12 K in a cooling pack (5.1) arranged vertically beneath.

10. The method as claimed in claim 9, **characterized in that** different supersaturations of the magma are adjusted for each cooling pack (5.1; 5.2).

11. The method as claimed in one of claims 9 to 10, **characterized in that** the heat transfer fluid is guided countercurrently through the cooling blocks (5.0).

12. The method as claimed in one of claims 9 to 11, **characterized in that** the temperature difference between the magma and the cooling blocks (5.0) in a cooling pack (5.1; 5.2) is kept constant or is variably adjusted.

13. The method as claimed in one of claims 9 to 12, **characterized in that** the formation of new crystals is detected by at least one optical sensor in the container (2.1) and/or in a pipeline and the new crystals are removed and/or operating parameters are changed on the basis of the sensor data.

## Revendications

1. Cristallisoir de refroidissement (2.0) pour magma de saccharose, placé dans un récipient (2.1) orienté verticalement et doté du côté supérieur d'une entrée (2.2) pour l'alimentation en magma et du côté inférieur d'une sortie (2.3) pour son évacuation, le cristallisoir comprenant plusieurs blocs de refroidissement (5.0) espacés verticalement les uns des autres, les blocs de refroidissement (5.0) étant traversés par un fluide caloporteur et étant couplés à un échangeur de chaleur (2.1.2 ; 2.2.2), afin de dissiper la chaleur du magma,
**caractérisé en ce que** plusieurs blocs de refroidissement (5.0) sont combinés pour former un empilement de refroidissement respectif (5.1 ; 5.2), et au moins deux empilements de refroidissement (5.1 ; 5.2) sont réalisés sous forme de circuits de refroidissement séparés, ayant des échangeurs de chaleur (2.1.2 ; 2.2.2) séparés, et sont séparés l'un de l'autre sur le plan thermique et hydraulique.

2. Cristallisoir de refroidissement selon la revendication 1,
**caractérisé en ce que** les empilements de refroidissement (5.1 ; 5.2) sont séparés verticalement.

3. Cristallisoir de refroidissement selon la revendication 1 ou 2,
**caractérisé en ce que** la différence de température entre le magma et l'empilement de refroidissement respectif (5.1 ; 5.2) est réglée de manière décroissante de haut en bas.

4. Cristallisoir de refroidissement selon l'une des revendications précédentes,
**caractérisé en ce que** les débits du fluide caloporteur traversant les empilements de refroidissement (5.1 ; 5.2) sont réglables séparément.

5. Cristallisoir de refroidissement selon l'une des revendications précédentes,
**caractérisé en ce que** la température d'entrée du fluide caloporteur dans l'empilement de refroidissement respectif (5.1 ; 5.2) est réglable séparément.

6. Cristallisoir de refroidissement selon l'une des revendications précédentes,
**caractérisé en ce que** les blocs de refroidissement (5.0) sont disposés de manière mobile verticalement dans le récipient (2.1) et sont couplés à un entraînement (6.1).

7. Cristallisoir de refroidissement selon l'une des revendications précédentes,
**caractérisé en ce qu'**un capteur de température (5.3) est disposé dans la zone entre deux empilements de refroidissement (5.1 ; 5.2) et/ou blocs de refroidissement (5.0).

8. Cristallisoir de refroidissement selon l'une des revendications précédentes,
**caractérisé en ce qu'**au moins un capteur optique est disposé dans le récipient (2.1) et/ou dans une conduite tubulaire afin de détecter la formation de nouveaux cristaux.

9. Procédé de cristallisation du sucre et de refroidissement du magma de sucre dans un cristallisoir de refroidissement selon l'une des revendications 1 à 8,
**caractérisé en ce qu'**une différence de température décroissante de haut en bas est réglée entre les blocs de refroidissement (5.0) et le magma du fait qu'une différence de température comprise entre 15 K et 20 K est réglée dans l'empilement de refroidissement (5.2) le plus haut, et qu'une différence de température comprise entre 8 K et 12 K est réglée dans un empilement de refroidissement (5.1) disposé verticalement en dessous.

10. Procédé selon la revendication 9,
**caractérisé en ce que** des sursaturations différentes du magma sont réglées pour chaque empilement de refroidissement (5.1 ; 5.2).

11. Procédé selon l'une des revendications 9 à 10,
**caractérisé en ce que** le fluide caloporteur est acheminé à contre-courant à travers les blocs de refroidissement (5.0).

12. Procédé selon l'une des revendications 9 à 11,
**caractérisé en ce que** la différence de température entre le magma et les blocs de refroidissement (5.0) dans un empilement de refroidissement (5.1 ; 5.2) est maintenue constante ou réglée de manière variable.

13. Procédé selon l'une des revendications 9 à 12,
**caractérisé en ce qu'**une formation de nouveaux cristaux est détectée par au moins un capteur optique dans le récipient (2.1) et/ou dans une conduite tubulaire, et les nouveaux cristaux sont retirés et/ou les paramètres de fonctionnement sont modifiés sur la base des données du capteur.
